# EUROPÄISCHE PATENTANMELDUNG

(11) **EP 2 692 817 A1**
(43) Veröffentlichungstag der Anmeldung: **05.02.2014**
(21) Anmeldenummer: 12178936.6
(22) Anmeldetag: 02.08.2012
(51) Int. Cl.: C09K 3/14, B24D 3/14, C04B 35/111

(54) **Schleifkorn mit unter einem Winkel angeordneten Platten**

(71) Anmelder: ROBERT BOSCH GMBH, 70442 Stuttgart (DE)
(72) Erfinder: Fuenfschilling, Stefan, 78337 Öhningen (DE); Rohner, Thomas, 8546 Kefikon (CH)

(57) **Zusammenfassung**

Die Erfindung betrifft einerseits ein Schleifkorn (10), enthaltend mindestens drei Platten (11-1, 11-2, 11-3), wobei jede der mindestens drei Platten (11-1, 11-2, 11-3) unter einem Winkel (a) zu zumindest zwei der mindestens drei Platten (11-1, 11-2, 11-3) angeordnet ist. Das Schleifkorn (10) kann ein keramisches Material enthalten, insbesondere polykristallines α-Al₂O₃. Zudem sind Gesamtheiten von Schleifkörnern (10), Verfahren zum Herstellen von Schleifkörnern (10), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giessformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in a-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Teätraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise ist eine elektrostatische Streuung für die in WO 2012/018903 offenbarten Schleifkörner erforderlich, die eine Bodenplatte und eine in einem Winkel dazu angeordnete weitere Platte aufweisen. Die eigentlich gewünschte Schleifwirkung wird nur durch diejenigen Schleifkörner erreicht, deren Bodenplatte auf der Schleifmittel-Unterlage aufliegt. Eine solche Orientierung kann jedoch durch eine mechanische Streuung nicht zuverlässig gewährleistet werden. Selbst wenn eine nur teilweise Orientierung der Schleifkörner toleriert würde, so wären der Anteil der orientierten Schleifkörner und daher auch die Schleifwirkung kaum kontrollierbar.

Es ist daher eine Aufgabe der vorliegenden Erfindung, die Nachteile des Standes der Technik zumindest teilweise zu beheben. Insbesondere soll also ein Schleifkorn bereitgestellt werden, welches mittels mechanischer Streuung auf einer Schleifmittel-Unterlage angeordnet werden kann, so dass zur Optimierung der Schleifwirkung eine Mehrheit der Schleifkörner in gewünschter Weise auf der Schleifmittel-Unterlage orientiert wird. Insbesondere soll zudem das Schleifkorn derart ausgestaltet sein, das auch bei nicht gewünschter Orientierung des Schleifkorns auf der Schleifmittel-Unterlage immer zumindest eine Schleifkante des Schleifkorns zum Schleifprozess beitragen kann.

Diese Aufgabe wird gelöst durch ein Schleifkorn mit definierter Form, welches mindestens drei Platten enthält. Jede der mindestens drei Platten ist unter einem Winkel zu zumindest zwei der mindestens drei Platten angeordnet.

Unter der Anordnung der Platten unter einem Winkel wird vorliegend verstanden, dass jede der mindestens drei Platten unter einem Winkel ungleich 0° oder 180° zu zumindest zwei der anderen Platten angeordnet ist.

Ein Schleifkorn mit einer derartigen Form hat den Vorteil, dass in jeder Orientierung des auf der Schleifmittel-Unterlage angeordneten Schleifkorns eine Kante oder Ecke des Schleifkorns zur zu bearbeitenden Oberfläche hin orientiert ist; eine Schleifwirkung entsteht ja dadurch, dass von der Unterlage weg weisende Randbereiche des Schleifkorns und insbesondere dort vorliegende Kanten und/oder Ecken auf eine zu bearbeitende Oberfläche hin weisen; somit kann zuverlässig eine hohe Schleifwirkung erzielt werden.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Grösse kann experimentell mit Hilfe eines Mikroskops bestimmt werden. Sie wird verstanden als der Durchmesser eines Hüllkreises des mikroskopierten Bildes des Schleifkorns, also als der kleinste Durchmesser eines Kreises, der das Bild umschliesst.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Bevorzugt weist das Schleifkorn aber eine wie oben beschriebene idealisierte Form auf.

Bei den Platten handelt es sich bevorzugt um gedachte Körper, aus denen das gesamte Schleifkorn nur gedanklich zusammengesetzt ist. Dass das Schleifkorn mindestens zwei oder mehr Platten enthält, ist also nicht zwingend dahingehend zu verstehen, dass das Schleifkorn aus zwei oder mehr zunächst separat hergestellten Platten zusammengefügt wurde oder ist. Stattdessen sind die erfindungsgemässen Schleifkörner bevorzugt einstückig ausgebildet und hergestellt.

Der oben genannte Winkel, unter dem die Platten zueinander angeordnet sind, kann im Bereich von 90° bis 150° liegen. Bevorzugt liegt der Winkel im Bereich von 110° bis 130° und besonders bevorzugt von 115° bis 125°. Ganz besonders bevorzugt beträgt der Winkel etwa 120°. Insbesondere können die Winkel zwischen den Platten unterschiedlich voneinander sein; beispielsweise kann der Winkel zwischen einer ersten Platte und einer zweiten Platte etwa 120° betragen und zwischen der ersten Platte und einer dritten Platte etwa 100°, wobei dann der Winkel zwischen zweiter Platte und dritter Platte etwa 140° beträgt.

Die Anordnung der Platten in diesem Winkelbereich zueinander hat den Vorteil, dass auch bei mechanischer Streuung der Schleifkörner auf eine Schleifmittel-Unterlage eine Mehrheit der Schleifkörner in gewünschter Weise auf der Schleifmittel-Unterlage orientiert werden, wodurch die Schleifwirkung optimiert wird.

Bevorzugt weist jede Platte zumindest drei Stirnseiten auf, wobei drei der Stirnseiten als Auflageseite, Berührungsseite und Oberseite ausgebildet sind. Insbesondere wird eine Ebene im Wesentlichen parallel zu zumindest drei Auflageseiten der mindestens drei Platten definiert zur Fixierung des Schleifkorns an und/oder in einem Substrat, insbesondere auf einer Unterlage eines flexiblen Schleifmittels.

Die Auflageseite ist die Seite der Platte, die statistisch mit grösster Häufigkeit bei mechanischer Streuung des Schleifkorns im fixierten Zustand dem Substrat zugewandt ist. Die Berührungsseite ist die Seite der Platte, an der diese bevorzugt zumindest eine der mindestens zwei weiteren berührt; die Berührungsseite ist nicht Teil der Oberfläche des Schleifkorns. Die Oberseite ist die der Auflageseite und/oder Berührungsseite benachbarte Stirnseite der Platte.

Bevorzugt berühren sich die mindestens drei Platten an einer Berührungsseite der Platten. Mit anderen Worten durchdringen sich die Platten nicht. Dies hat den Vorteil einer möglichen flexiblen Anordenbarkeit der Platten zueinander zur Optimierung der Schleifwirkung des Schleifkorns.

Es kann zumindest eine der Platten, bevorzugt alle Platten, in einer Schnittebene im Wesentlichen parallel zu einer Seitenfläche der Platte als Polygon ausgebildet sein. Bevorzugt sind alle Platten als Polygon ausgebildet. Insbesondere ist das Polygon im Wesentlichen viereckig oder insbesondere im Wesentlichen dreieckig.

Dies erlaubt vorteilhaft eine Optimierung der Schleifwirkung durch Auswahl entsprechender Polygone mit unterschiedlicher Anzahl an Schleifkanten und/oder Ecken.

Die Oberseite zumindest einer Platte kann entlang der längsten Ausdehnung zumindest einseitig, insbesondere zweiseitig, zumindest abschnittsweise konkav ausgebildet sein. Alternativ kann die Oberseite als Trapez ausgebildet sein. Insbesondere ist das Trapez gleichschenklig und weiter insbesondere rechteckig. Es ist beispielsweise möglich, dass eine Oberseite einer ersten Platte einseitig konkav ausgebildet ist und eine Oberseite einer zweiten Platte als Trapez ausgebildet ist; alternativ sind auch beliebige andere Kombinationen der Ausgestaltung der Oberseiten der Platten denkbar.

Ein Abschnitt der Aussenkontur wird im Rahmen der vorliegenden Erfindung als konkav verstanden, wenn die geradlinige Verbindung der Endpunkte dieses Abschnitts vollständig ausserhalb der Platte verläuft. Als konkaver Abschnitt wird insbesondere ein Abschnitt mit strikt konkaver Krümmung angesehen. Ausserdem wird im Rahmen der Erfindung auch ein Abschnitt als konkav bezeichnet, der sich aus zwei benachbarten ebenen Teilabschnitten zusammensetzt, die an einer überstumpfen Ecke oder Kante zusammenlaufen. Ein überstumpfer Winkel ist dabei definitionsgemäss grösser als 180°.

Die Platten können als ungleichseitige Dreiecke ausgebildet sein. Insbesondere berühren sich die ungleichseitigen Dreiecke an den längsten Seiten oder an den kürzesten Seiten der Dreiecke. Hierdurch ist es vorteilhaft möglich, den Anteil der in gewünschter Weise orientierten Schleifkörner bei mechanischer Streuung der Schleifkörner auf einer Schleifmittel-Unterlage zu erhöhen. Zudem ist es durch Anordnung der ungleichseitigen Dreiecke derart, dass diese sich an den längsten Seiten berühren, vorteilhaft möglich, die Schleifwirkung zu verbessern; bei Anordnung der ungleichseitigen Dreiecke derart, dass diese sich an den kürzesten Seiten berühren, ist es möglich, die Höhe eines Schleifartikels umfassend die Schleifkörner gegebenenfalls zu verringern, wobei dadurch unter Umständen durch eine Erhöhung eines Eingriffswinkels eine Verringerung der Schleifwirkung erfolgen kann.

Die Oberseite zumindest einer der Platten kann in einer Seitenansicht konkav oder konvex ausgebildet sein. Dies hat den Vorteil der Verbesserung der Schleifwirkung durch Erhöhung beispielsweise der Anzahl der Schleifkanten des Schleifkorns. Insbesondere sind beliebige Kombinationen der Ausbildung der Oberseiten der zumindest drei Platten denkbar.

Zwischen der Berührungsseite und der Oberseite der Platte kann ein Eingriffswinkel gebildet sein. Dieser kann im Bereich von 10° bis 120°, bevorzugt von 15° bis 90°, weiter bevorzugt von 15° bis 60° und besonders bevorzugt von 15° bis 50° liegen. Verschiedene Eingriffswinkel können verschiedene Vorteile herbeiführen. Für eine mechanische Streuung ist es vorteilhaft, wenn der Eingriffswinkel im Bereich von 25° bis 35°, bevorzugt von 27° bis 33°, besonders bevorzugt von 29° bis 31° liegt. Diese eher grösseren Winkel führen zu einem flacheren Schleifkorn, so dass sich das Schleifkorn bei einer mechanischen Streuung bevorzugt mit den Auflageseiten der Platten auf einer Schleifmittel-Unterlage orientiert. Im Sinne eines vorteilhaften Spanverhaltens sind eher spitze Eingriffswinkel zweckmässig, die beispielsweise im Bereich von 15° bis 28°, bevorzugt von 18° bis 25°, besonders bevorzugt von 20° bis 25° liegen können.

Das Verhältnis aus der Dicke einer Platte und der Höhe dieser Platte kann im Bereich von 0,05 bis 0,5, bevorzugt von 0,1 bis 0,4, besonders bevorzugt von 0,2 bis 0,3 liegen. Die Dicke der Platte liegt insbesondere im Bereich von 150 µm bis 400 µm und bevorzugt von 200 µm bis 300 µm.

In vorteilhaften Ausbildungen sind die mindestens drei Platten zueinander kongruent, können also durch eine Drehung und/oder Verschiebung ineinander überführt werden. Hierdurch sind die Schleifkörner besonders symmetrisch, insbesondere wenn drei Platten unter einem Winkel 120° zueinander angeordnet sind.

Eine oder mehrere Platten können auch eine oder mehrere Öffnungen aufweisen. Die Öffnung kann als Sackloch oder als durchgehende Öffnung ausgebildet sein. Eine solche Öffnung bildet weitere Kanten des Schleifkorns, die eine zusätzliche Schleifwirkung erzeugen können. Zudem kann die Öffnung beim Nassschliff auch als Flüssigkeitsreservoir oder zur Aufnahme von Schmiermittel dienen. Wenn die Öffnung an der der Auflageseite gegenüberliegenden Ende der Platte ausmündet, so verringert sich zudem auch der Querschnitt, der an einer zu bearbeitenden Oberfläche angreift. Dadurch verringert sich die Reibung, und es entsteht weniger Wärme.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht. Beispielsweise kann die Beschichtung nur auf den Auflageseiten der Platten vorhanden sein.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumäoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Die Giessform kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Falls beispielsweise das Schleifkorn aus drei Dreiecken besteht, die sich an einer Berührungsseite berühren, kann die Giessform Vertiefungen aufweisen, die den Dreiecken entsprechen; eine Bodenfläche der Vertiefung der Giessform ist im Wesentlichen komplementär zu der Aussenform des Schleifkorns auf der der Auflageseite des Schleifkorns abgewandten Seite; eine Seitenwand der Vertiefung der Giessform ist im Wesentlichen komplementär zu den Seitenflächen der Dreiecke.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so orientiert, dass der oben beschriebene Vorteil vorliegt. Auf eine aufwändigere elektrostatische Streuung kann also verzichtet werden.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figur 1: eine erste Ausführungsform eines erfindungsgemässen Schleifkorns in einer perspektivischen Ansicht;
Figur 2: eine Draufsicht auf das erfindungsgemässe Schleifkorn gemäss Figur 1;
Figur 3: ein Schleifkorn gemäss Figur 1 auf einer Unterlage in einer Seitenansicht;
Figuren 4a-4i: alternative Ausführungsformen zumindest einer der drei Platten des Schleifkorns gemäss Figur 1 in einer Seitenansicht;
Figuren 5a-5e: alternative Ausführungsformen zumindest einer der drei Platten des Schleifkorns gemäss Figur 1 in einer Vorderansicht der Oberseite;
Figur 6: Draufsicht auf eine zweite Ausführungsform eines erfindungsgemässen Schleifkorns.

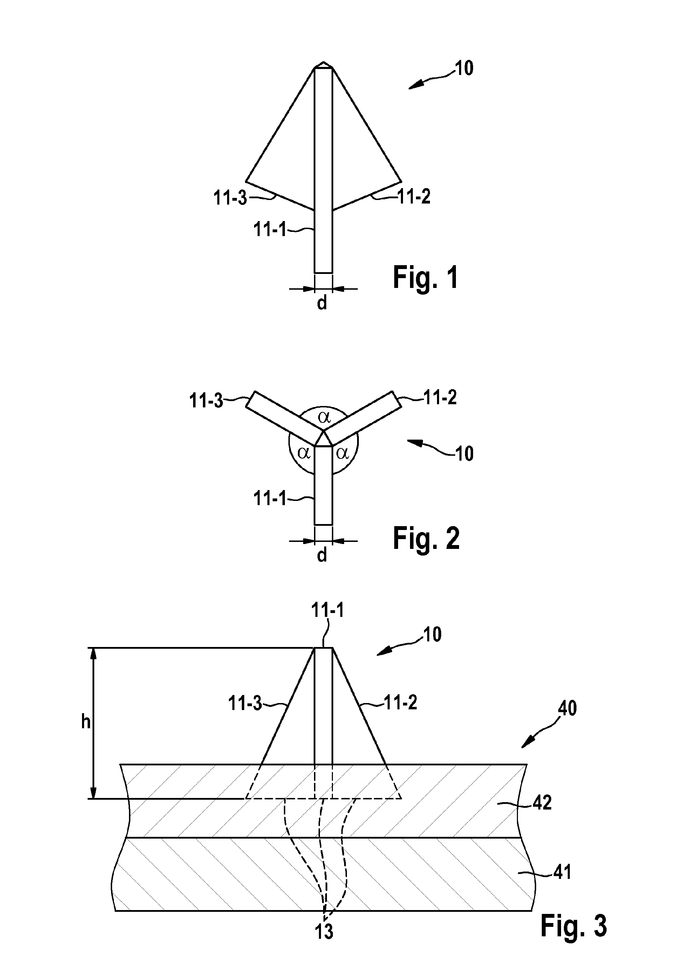

In Figur 1 ist eine erste erfindungsgemässe Ausführungsform eines Schleifkorns 10 perspektivisch dargestellt. Das Schleifkorn 10 enthält drei Platten 11-1, 11-2 und 11-3, bei denen es sich um gedachte Körper handelt, aus denen das Schleifkorn 10 nur gedanklich zusammengesetzt ist; tatsächlich ist das Schleifkorn 10 also einstückig ausgebildet.

Die Platten 11-1, 11-2 und 11-3 sind als ungleichseitige Dreiecke ausgebildet, wobei die Dreiecke 11-1, 11-2 und 11-3 idealisiert eine identische Form aufweisen. Die Dreiecke haben etwa eine Dicke d = 250 µm.

In Figur 2 ist eine Draufsicht auf das Schleifkorn 10 gemäss Figur 1 dargestellt. Die Dreiecke 11-1, 11-2 und 11-3 sind jeweils unter einem Winkel a = 120° zueinander angeordnet. Gleiche Referenzzeichen bezeichnen gleiche Merkmale in allen Figuren und werden deshalb nur bei Bedarf erneut erläutert.

In Figur 3 ist in einer Seitenansicht schematisch ein Schleifartikel 40 dargestellt, welcher ein in den Figuren 1 und 2 dargestelltes Schleifkorn 10 enthält. Das Schleifkorn 10 ist mit Hilfe eines Bindemittels 42 an einer Unterlage 41 fixiert. Zur Vereinfachung der Darstellung ist hier nur ein einziges Schleifkorn 10 gezeigt, obwohl der Schleifartikel 40 natürlich tatsächlich eine Vielzahl solcher Schleifkörner 10 enthält. Jeweils eine Auflageseite 13 der Dreiecke 11-1, 11-2 und 11-3 ist der Unterlage 41 zugewandt. Die durch die drei Auflageseiten 13 der Dreiecke 11-1, 11-2 und 11-3 definierte Ebene stellt die Ebene dar, die bei mechanischer Streuung des Schleifkorns 10 auf der Unterlage 41 mit grösster Wahrscheinlichkeit der Unterlage 41 zugewandt ist. Die Dreiecke haben eine Höhe h = 1000µm.

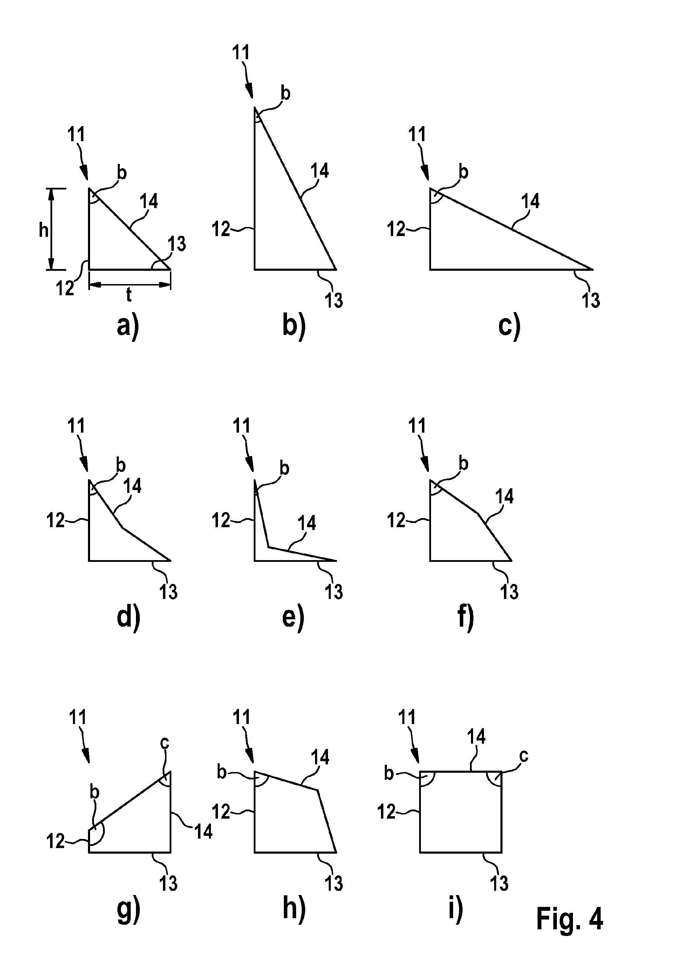

In den Figuren 4a-4i sind verschiedene Ausführungsformen von Platten 11 dargestellt, die in einem Schleifkorn wie in Figur 1 dargestellt verwendbar sind. Diese Platten 11 weisen eine Berührungsseite 12, eine Auflageseite 13 und eine Oberseite 14 auf. Zur Bildung eines Schleifkorns werden zumindest drei Platten 11 so zueinander angeordnet, dass diese einander an den Berührungsseiten 12 berühren.

Die Platte 11 gemäss Figur 4a weist eine Höhe h = 1000 µm und eine Tiefe t = 1000 µm auf. Ein Eingriffswinkel b beträgt 45°, wobei der Eingriffswinkel durch die Ecke eingeschlossen wird, die bei gewünschter Anordnung des Schleifkorns die grösste Schleifwirkung ausübt.

Die Platte 11 gemäss Figur 4b weist einen Eingriffswinkel b von 20° auf und die Platte 11 gemäss Figur 4c einen Eingriffswinkel b = 70°.

Die Platten 11 gemäss Figur 4d und 4e weisen eine konkav ausgebildete Oberseite 14 auf. Der Eingriffswinkel b gemäss Figur 4d beträgt 44° und der Eingriffswinkel b gemäss Figur 4e beträgt 10°.

In Figur 4f ist eine Platte 11 mit einer konvex ausgebildeten Oberseite 14 dargestellt mit einem Eingriffswinkel b = 46°.

In Figur 4g ist eine viereckig ausgebildete Platte 11 dargestellt mit einem Eingriffswinkel b = 120° und einem Eckenwinkel c = 50°. Bei Anordnung der Platte 11 in einem Schleifkorn, wobei die Platte mit der Auflageseite 13 auf der Unterlage aufliegt, wird eine Schleifwirkung im Wesentlichen durch die Ecke mit dem Eckenwinkel c erzielt - im Gegensatz zur Figur 4a.

In Figur 4h ist eine dreieckige Platte 11 mit konvexer Oberseite 14 dargestellt. Alternativ kann die Platte 11 auch als viereckiges Polygon angesehen werden.

In Figur 4i ist eine quadratisch ausgebildete Platte 11 dargestellt.

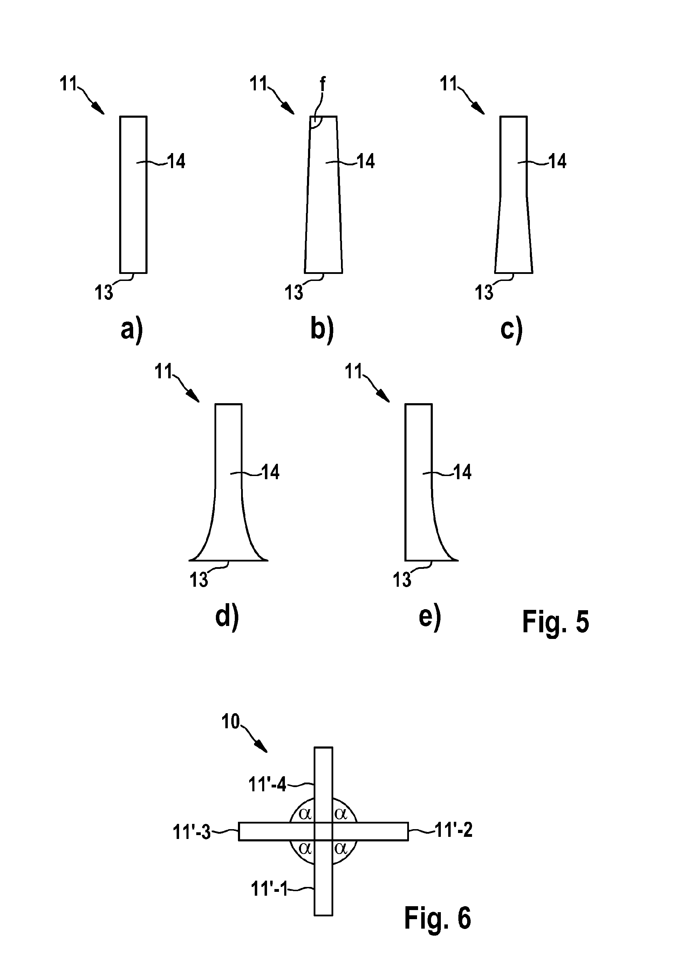

In den Figuren 5a-5e ist eine Vorderansicht der Oberseite 14 einer Platte 11 dargestellt, wobei die Blickrichtung im Wesentlichen parallel zur Auflageseite 13 ausgerichtet ist.

In Figur 5a hat die Oberseite 14 eine rechteckige Form. In Figur 5b hat die Oberseite 14 die Form eines gleichschenkligen Trapezes mit einem Öffnungswinkel f = 100°. In den Figuren 5c und 5d weist die Oberseite 14 entlang der längsten Ausdehnung zweiseitig eine konkave Form auf. In Figur 5e ist die Oberseite 14 nur einseitig konkav ausgebildet.

In Figur 6 ist eine zweite Ausführungsform eines erfindungsgemässen Schleifkorns 10 dargestellt.

Das Schleifkorn 10 weist vier Platten 11'-1, 11'-2, 11'-3 und 11'-4 auf. Die Platten sind unter einem Winkel a = 90° zueinander angeordnet.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Giessform entfernt wird. Die aus den Auflageseiten der Platten gebildete insbesondere ebene Fläche kann dann aus der oberen freien, nicht in Kontakt mit der Giessform stehenden Fläche der Dispersion entstehen. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (10), enthaltend mindestens drei Platten (11-1, 11-2, 11-3; 11'-1, 11'-2, 11'-3, 11'-4),
**dadurch gekennzeichnet, dass**
jede der mindestens drei Platten (11-1, 11-2, 11-3; 11'-1, 11'-2, 11'-3, 11'-4) unter einem Winkel (a) zu zumindest zwei der mindestens drei Platten (11-1, 11-2, 11-3; 11'-1, 11'-2, 11'-3, 11'-4) angeordnet ist.

2. Schleifkorn (10) gemäss einem der vorangehenden Ansprüche,
**dadurch gekennzeichnet, dass**
der Winkel (a) im Bereich von 90° bis 150°, bevorzugt von 110° bis 130°, besonders bevorzugt von 115° bis 125° liegt und ganz besonders bevorzugt etwa 120° beträgt.

3. Schleifkorn (10) gemäss einem der vorangehenden Ansprüche,
**dadurch gekennzeichnet, dass**
jede Platte (11-1, 11-2, 11-3; 11'-1, 11'-2, 11'-3, 11'-4) zumindest drei Stirnseiten aufweist, wobei drei der Stirnseiten als Auflageseite (13), Berührungsseite (12) und Oberseite (14) ausgebildet sind, und wobei insbesondere eine Ebene im Wesentlichen parallel zu zumindest drei Auflageseiten (13) der mindestens drei Platten (11-1, 11-2, 11-3; 11'-1, 11'-2, 11'-3, 11'-4) definiert wird zur Fixierung des Schleifkorns (10) an und/oder in einem Substrat (41), insbesondere auf einer Unterlage (41) eines beschichteten Schleifartikels.

4. Schleifkorn (10) gemäss einem der vorangehenden Ansprüche,
**dadurch gekennzeichnet, dass**
die mindestens drei Platten (11-1, 11-2, 11-3; 11'-1, 11'-2, 11'-3, 11'-4) sich an einer Berührungsseite (12) der Platten (11-1, 11-2, 11-3; 11'-1, 11'-2, 11'-3, 11'-4) berühren.

5. Schleifkorn (10) gemäss einem der vorangehenden Ansprüche,
**dadurch gekennzeichnet, dass**
zumindest eine der Platten (11-1, 11-2, 11-3; 11'-1, 11'-2, 11'-3, 11'-4), bevorzugt alle Platten (11-1, 11-2, 11-3; 11'-1, 11'-2, 11'-3, 11'-4), in einer Schnittebene im Wesentlichen parallel zu einer Seitenfläche der Platte (11-1, 11-2, 11-3; 11'-1, 11'-2, 11'-3, 11'-4) als Polygon, insbesondere im Wesentlichen viereckig, insbesondere im Wesentlichen dreieckig, ausgebildet ist.

6. Schleifkorn (10) gemäss einem der vorangehenden Ansprüche,
**dadurch gekennzeichnet, dass**
zumindest eine der Platten (11-1, 11-2, 11-3; 11'-1, 11'-2, 11'-3, 11'-4) eine Oberseite (14) mit einer der folgenden Formen aufweist:
- die Oberseite (14) ist entlang der längsten Ausdehnung zumindest einseitig, insbesondere zweiseitig, zumindest abschnittsweise konkav ausgebildet, und/oder
- die Oberseite (14) ist als insbesondere gleichschenkliges Trapez, insbesondere rechteckig, ausgebildet.

7. Schleifkorn (10) gemäss einem der vorangehenden Ansprüche,
**dadurch gekennzeichnet, dass**
die Platten (11-1, 11-2, 11-3; 11'-1, 11'-2, 11'-3, 11'-4) als ungleichseitige Dreiecke ausgebildet sind, die sich insbesondere an den längsten Seiten oder an den kürzesten Seiten berühren.

8. Schleifkorn (10) gemäss einem der vorangehenden Ansprüche,
**dadurch gekennzeichnet, dass**
zumindest eine Oberseite der Platte (11-1, 11-2, 11-3; 11'-1, 11'-2, 11'-3, 11'-4) in einer Seitenansicht konkav oder konvex ausgebildet ist.

9. Schleifkorn (10) gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

10. Gesamtheit von Schleifkörnern (10),
**dadurch gekennzeichnet, dass**
sie mindestens 20 Gew.-%, bevorzugt mindestens 50 Gew.-%, besonders bevorzugt mindestens 90 Gew.-% Schleifkörner (10) nach einem der vorangehenden Ansprüche enthält.

11. Verfahren zum Herstellen mindestens eines Schleifkorns (10) oder einer Gesamtheit von Schleifkörnern (10) gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (10) zu erhalten.

12. Giessform zum Herstellen mindestens eines Schleifkorns (10) nach einem der Ansprüche 1 bis 9, wobei die Giessform mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (10) ist.

13. Schleifartikel, enthaltend eine Gesamtheit von Schleifkörnern (10) gemäss Anspruch 10.

14. Verfahren zum Herstellen eines Schleifartikels (40) gemäss Anspruch 13, enthaltend einen Schritt, in dem eine Gesamtheit von Schleifkörnern (10) gemäss Anspruch 10 an und/oder in einem Substrat (41) fixiert wird, insbesondere mittels eines Bindemittels (42).

15. Verfahren zum Schleifen einer Oberfläche, insbesondere einer lackierten Oberfläche, mit einem Schleifartikel (40) gemäss Anspruch 13.
